# FASCICULE DE BREVET EUROPEEN

(11) **EP 2 819 800 B1**
(45) Date de publication et mention de la délivrance du brevet: **24.02.2016**
(21) Numéro de dépôt: 13712865.8
(22) Date de dépôt: 27.02.2013
(51) Int. Cl.: B23K 1/00, B23K 1/19

(54) **PROCÉDÉ D'ASSEMBLAGE DE DEUX PIÈCES MÉTALLIQUES PAR BRASAGE**
VERFAHREN ZUM HARTLÖTEN VON METALLISCHEN BAUTEILEN
BRAZING METHOD OF METAL COMPONENTS

(30) Priorité: 02.03.2012 FR 1251962
(43) Date de publication de la demande: 07.01.2015
(73) Titulaire: SNECMA, 75015 Paris (FR)
(72) Inventeur: CLEMENT, Jean-François, F-77550 Moissy-cramayel Cedex (FR)
(74) Mandataire: Gevers & Orès
(86) Numéro de dépôt international: PCT/FR2013/050410
(87) Numéro de publication internationale: WO 2013/128124

(56) Documents cités:
- EP-A1- 1 652 612
- US-A1- 2009 283 503

## Description

La présente invention porte sur le brasage de pièces en superalliage à base de nickel ou de cobalt, c'est-à-dire en alliage réfractaire ayant une teneur pondérale d'au moins 50% de nickel ou de cobalt respectivement, notamment dans le domaine aéronautique.

### Art antérieur

Dans les moteurs à turbine à gaz aéronautiques, de nombreuses pièces sont réalisées par mécano-brasage. Le brasage comprend la disposition entre les faces de liaison des pièces métalliques à assembler une couche métallique de liaison de composition proche mais comportant un élément dit fondant qui rend celle-ci plus fusibles que les alliages des pièces à assembler. L'apport du métal en fusion peut être réalisé par capillarité le long de l'intervalle de liaison. On forme alors un joint capillaire. On comprend par joint capillaire un joint obtenu dans un espace de l'ordre de 200µm entre les pièces pour le brasage.

Le brevet FR 2 896 175 du présent déposant décrit une composition améliorée de métal d'apport pour la formation d'un joint de liaison entre deux pièces en superalliage ainsi que le procédé de brasage de secteurs de redresseur de turbomachine, utilisant ce type de métal d'apport.

Les secteurs de redresseur de compresseur à haute pression, HP, sont composés d'aubes forgées unitairement qui sont brasées sur des viroles inférieures et supérieures. Ces pièces sont en alliage corroyé à base nickel ou cobalt tel que l'alliage désigné INC0718 et de formule NC19FeNb. Les métaux d'apport utilisés pour le brasage des pièces entre elles sont des alliages, à base nickel également si le métal de l'alliage est le nickel, contenant du bore et/ou du silicium comme élément fondant. Les brasures obtenues avec ce type d'alliage sont très performantes dans des joints capillaires.

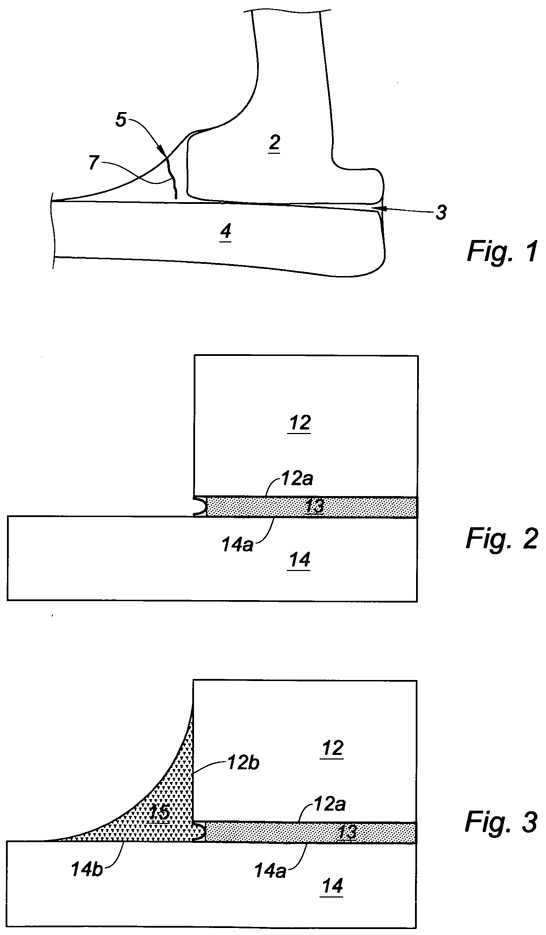

Comme il est décrit dans le document EP-A-1 652 612, la disposition des pièces dans l'assemblage peut nécessiter la formation d'un congé de raccordement dans le prolongement du joint de liaison sous la forme d'une moulure concave arrondie, en arc de cercle, située entre les deux faces adjacente du joint. Lorsque les pièces comprennent un congé de raccordement, l'amas de métal d'apport peut être important. On a constaté que dans ce cas les amas de métal d'apport présentaient un caractère fragile. En effet les métaux d'apport fondus à base nickel avec silicium et bore possèdent une ductilité très faible et fissurent lorsqu'ils sont soumis à des déformations de faible amplitude. On a reproduit sur la figure 1, la coupe micrographique d'un assemblage par brasure de deux pièces 2 et 4 selon cette technique. Les pièces sont assemblées et liées entre elles par un joint brasé 3, capillaire. Un congé 5 de raccordement a été réalisé entre les deux pièces dans le prolongement du joint, par apport de métal fondu, le même que celui du joint. L'assemblage a ensuite été soumis à des tests de fatigue. On voit que le joint 3 est resté intègre, par contre, le congé de raccordement de plus grandes dimensions que le joint, avec une épaisseur de plus de 0,5mm, est fissuré sous l'effet de la sollicitation des contraintes de déformation.

Cette fissure 7 initiée dans l'amas de métal d'apport 5 ne se propage que très rarement dans le joint capillaire 3 brasé car ce dernier est généralement bridé et moins sollicité mécaniquement. Par contre, sous l'effet d'entailles avec concentration de contraintes, cette fissure est susceptible de se propager dans le métal de base en simple épaisseur.

Pour éviter ce problème de fissuration dans les congés de brasure, pour des assemblages de secteurs de redresseur, on connaît des solutions, qui ont été appliquées mais pas généralisées, à savoir :
- Utilisation d'un métal d'apport performant pour l'ensemble de la brasure, comme un alliage de base Or, notamment la nuance AuNi955 qui contient 82% d'Or.
- Découpe par usinage de la virole en INC0718 pour apporter une souplesse et réduire les contraintes au niveau des rayons de raccordement aube-virole.

On comprend que les deux solutions ci dessus soient peu utilisées, en raison de leur coût prohibitif. Dans le premier cas il s'agit de l'emploi d'un métal précieux, dans l'autre cas il s'agit du coût d'usinage de la virole dans les zones sollicitées proches des congés de raccordement de brasure, qui est en outre susceptible de créer des fuites d'air dans la veine et de fragiliser les viroles découpées.

### Exposé de l'invention,

La présente invention a pour objet un procédé qui permet de réaliser un assemblage ne présentant pas les inconvénients de l'art antérieur et qui soit de moindre coût que les solutions existantes.

Le procédé d'assemblage, conforme à l'invention, est défini à la revendication 1.

La solution proposée consiste ainsi à utiliser deux métaux d'apport. Cette solution permet d'avoir deux types de comportement spécifiques : une grande performance en traction associée à une faible ductilité pour le joint de liaison, et une ductilité satisfaisante au niveau du congé de raccordement des deux pièces assemblées. Le joint de liaison est de préférence un joint capillaire.

En utilisant un alliage ductile pour la formation du congé de raccordement on évite de manière simple la formation de fissures à ce niveau.

Conformément à une autre caractéristique, la température de brasage du congé de raccordement est inférieure à la température de liquidus du métal du joint de liaison.

L'invention trouve un intérêt dans l'assemblage de pièces en superalliage, à base nickel ou cobalt. Plus particulièrement, le métal d'apport pour former le joint de liaison est un alliage à base nickel ou cobalt respectivement avec au moins un composé fondant. Le composé fondant est choisi parmi le bore, le silicium ou le phosphore. Par exemple un fondant couramment utilisé et le bore combiné au silicium.

Avantageusement, le métal d'apport formant le congé de raccordement est un alliage à base de cuivre, tel que CuMnNi930, ou bien à base de manganèse ou encore à base de métaux précieux, tels que l'or.

L'invention trouve une application avantageuse dans la fabrication de secteurs de redresseur, une pièce étant au moins une aube de compresseur de turbomachine et l'autre pièce une virole.

### Brève description des figures

La figure 1 est une coupe micrographique d'un assemblage de l'art antérieur.
La figure 2 est une représentation schématique de la formation d'un joint de liaison entre deux pièces métalliques en superalliage selon la première étape du procédé.
La figure 3 montre la formation du congé de raccordement en seconde étape du procédé de l'invention.

### Description détaillée d'un mode de réalisation de l'invention

Sur la figure 2, on voit en coupe les deux pièces 12 et 14 en superalliage tel que celui commercialisé sous la dénomination inco718. Les deux pièces sont liées entre elles par un joint de liaison 13 le long d'un intervalle ménagé entre deux faces de liaison, 12a et 12b, de l'une et l'autre pièce. Pour la fabrication d'un secteur de redresseur de compresseur de turbomachine, la première pièce 12 est une aube de redresseur et la seconde pièce 14, un élément de virole.

Avantageusement le joint de liaison est un joint capillaire d'épaisseur inférieure à 200µm. Le premier métal d'apport de brasage utilisé pour ce premier brasage est avantageusement, ici, une base nickel du type nickel-chrome additionné de bore et/ou de silicium comme élément fondant. On observe la présence d'un petit congé de raccordement entre les deux pièces.

Ce type d'alliage d'apport donne des joints brasés capillaires qui possèdent des tenues en traction et en cisaillement proches de celles du métal de base des pièces.

Dans la seconde étape, on dépose un second métal d'apport entre deux faces 12b et 14b des pièces, hors du joint de liaison. Le congé de raccordement 15 obtenu présente une surface rejoignant les deux faces 12b et 14b en forme d'arc de cercle tangent respectivement à ces deux surfaces.

Pour ce second brasage et la réalisation des congés de raccordement de brasure, on utilise un métal d'apport ductile.

Par ailleurs, il est réalisé à une température inférieure à la température de liquidus du premier alliage utilisé comme métal d'apport pour le joint de liaison. La ductilité du métal d'apport empêche l'apparition de fissures dans le congé de raccordement lors de déformation de la seconde pièce 14. En effet, la seconde pièce est, ici une virole, d'épaisseur relativement faible par rapport à la première pièce et elle est susceptible de se déformer en priorité.

Concernant l'assemblage d'un diffuseur de compresseur HP les matériaux en présence sont un alliage base nickel de formule NC19FeNb (INC0718) et un premier métal d'apport de formule NiCrBSi1000. Le brasage du joint de liaison est effectué à la température de 1040°C.

Ensuite, on procède à une nouvelle opération de brasage vers 960°C, pour réaliser le rechargement extérieur du joint et créer un congé de raccordement avec le second métal d'apport dont la composition a été choisie pour sa ductilité, par exemple un alliage a base cuivre de formule CuMnNi930.

## Revendications

1. Procédé d'assemblage de deux pièces (12, 14) métalliques par brasage, comprenant la formation par apport de métal d'un joint de liaison (13) entre deux surfaces de liaison (12a, 14a) et d'un congé de raccordement (15), la composition chimique du métal d'apport pour la formation du congé de raccordement (15) étant différente de celle du joint de liaison (13), **caractérisé par le fait que** le métal d'apport par la formation du congé de raccordement présente une ductilité qui est supérieure à celle du joint de liaison.

2. Procédé selon la revendication précédente dont le joint de liaison (13) est un joint capillaire.

3. Procédé selon l'une des revendications 1 et 2 dont la température de brasage du congé de raccordement (15) est inférieure à la température de liquidus du métal d'apport du joint de liaison (13).

4. Procédé selon l'une des revendications précédentes dont les pièces sont en superalliage à base nickel ou cobalt.

5. Procédé selon la revendication précédente dont le métal d'apport pour former le joint de liaison (13) est un alliage à base nickel ou cobalt respectivement avec au moins un composé fondant.

6. Procédé selon la revendication précédente dont le composé fondant est au moins un élément parmi le bore, le silicium et le phosphore.

7. Procédé selon l'une des revendications précédentes dont le métal d'apport du congé de raccordement est un alliage à base de cuivre, tel que CuMnNi930 de manganèse ou de métal précieux.

8. Procédé selon l'une des revendications précédentes dont une pièce (12) est une aube de compresseur de turbomachine et l'autre pièce est une virole (14).

9. Procédé selon la revendication précédente dont l'assemblage forme un secteur de redresseur.

## Patentansprüche

1. Verfahren zur Zusammenfügung von zwei metallischen Teilen (12, 14) durch Löten, welches die Bildung einer Verbindungsfuge (13) zwischen zwei Verbindungsoberflächen (12a, 14a) und einer Anschlusskehle (15) durch Zufuhr eines Metalls umfasst, wobei die chemische Zusammensetzung des zugeführten Metalls für die Bildung der Anschlusskehle (15) unterschiedlich von derjenigen der Verbindungsfuge (13) ist, **dadurch gekennzeichnet, dass** das durch Bildung der Anschlusskehle zugeführte Metall eine Duktilität aufweist, die höher ist als diejenige der Verbindungsfuge.

2. Verfahren nach dem vorhergehenden Anspruch, wobei die Verbindungsfuge (13) eine kapillare Fuge ist.

3. Verfahren nach einem der Ansprüche 1 und 2, wobei die Löttemperatur der Verbindungskehle (15) niedriger als die Liquidus-Temperatur des zugeführten Metalls der Verbindungsfuge (13) ist.

4. Verfahren nach einem der vorhergehenden Ansprüche, wobei die Teile aus Superlegierungen auf Basis von Nickel oder Kobalt bestehen.

5. Verfahren nach einem der vorhergehenden Ansprüche, wobei das zugeführte Metall zum Bilden der Verbindungsfuge (13) eine Legierung auf Basis von Nickel oder Kobalt jeweils mit zumindest einem Schmelzbestandteil ist.

6. Verfahren nach dem vorhergehenden Anspruch, wobei der Schmelzbestandteil zumindest ein Element aus Bor, Silizium und Phosphor ist.

7. Verfahren nach einem der vorhergehenden Ansprüche, wobei das zugeführte Metall der Verbindungskehle eine Verbindung auf Basis von Kupfer wie CuMnNi930, von Mangan oder Edelmetall ist.

8. Verfahren nach einem der vorhergehenden Ansprüche, wobei ein Teil (12) eine Schaufel einer Turbomaschine und das andere Teil ein Rohrabschnitt (14) ist.

9. Verfahren nach dem vorhergehenden Anspruch, wobei die Zusammenfügung einen Bereich eines Gleichrichters bildet.

## Claims

1. Method for joining two metal parts (12, 14) by brazing, comprising the formation, by means of a filler metal, of a bonding joint (13) between two bonding surfaces (12a, 14a) and of a fillet (15), being the chemical composition of the filler metal for forming the fillet (15) is different from that of the bonding joint (13), **characterized in that** the filler metal for forming the fillet has a ductility which is greater than that of the bonding joint.

2. Method according to the preceding claim, wherein the bonding joint (13) is a capillary joint.

3. Method according to either claim 1 or claim 2, wherein the brazing temperature for the fillet (15) is lower than the liquidus temperature of the filler metal of the bonding joint (13).

4. Method according to any of the preceding claims, wherein the parts are made of either a nickel-based or cobalt-based superalloy.

5. Method according to the preceding claim, wherein the filler metal for forming the bonding joint (13) is either a nickel-based or cobalt-based alloy having at least one flux compound.

6. Method according to the preceding claim, wherein the flux compound is at least one element from among boron, silicon and phosphorus.

7. Method according to any of the preceding claims, wherein the filler metal of the fillet is a copper-based alloy, such as CuMnNi930, a manganese-based alloy or a precious-metal alloy.

8. Method according to any of the preceding claims, wherein one part (12) is a turbine engine compressor blade and the other part is a collar (14).

9. Method according to the preceding claim, wherein the joining forms a stator vane sector.
